# FASCICULE DE BREVET EUROPEEN

(11) **EP 2 055 995 B1**
(45) Date de publication et mention de la délivrance du brevet: **14.07.2010**
(21) Numéro de dépôt: 08305761.2
(22) Date de dépôt: 31.10.2008
(51) Int. Cl.: F16H 59/04

(54) **Dispositif pour calibrer, au point mort, un levier de commande d'une boîte de vitesses avec la commande interne de ladite boite de vitesses d'un véhicule automobile**
Vorrichtung zum Kalibrieren eines Schalthebels in Neutralstellung mit der Schaltvorrichtung in einem Kraftfahrzeuggetriebe
Device for calibrating a gearbox shifting lever in neutral with the internal control of said gearbox of an automobile

(30) Priorité: 31.10.2007 FR 0758713
(43) Date de publication de la demande: 06.05.2009
(73) Titulaire: Dura Automotive Systems SAS, 91570 Bièvres (FR)
(72) Inventeur: Pradier, Philippe, 42290 Sorbiers (FR)
(74) Mandataire: Thivillier, Patrick

(56) Documents cités:
- EP-A- 0 504 003
- EP-A- 1 628 046
- FR-A- 2 775 748
- FR-A- 2 847 877
- FR-A- 2 893 549

## Description

L'invention se rattache au secteur technique des équipements pour véhicules automobiles et plus particulièrement à la commande de sélection des boîtes de vitesses, notamment mécaniques.

D'une manière parfaitement connue pour un homme du métier, la commande de sélection et de passage des vitesses s'effectue au moyen d'un levier monté avec capacité de déplacement angulaire dans un boîtier support généralement fixé au niveau de l'habitacle du véhicule automobile. L'extrémité inférieure du levier présente des agencements pour assurer la sélection et le passage des vitesses, en combinaison avec généralement des organes de renvoi.

Dans une forme de réalisation couramment employée, l'élément de renvoi et de sélection assujetti au levier de commande, est monté avec capacité d'articulation par rapport à un axe. Cet axe reçoit un ressort en épingle monté de manière précontrainte. Les branches du ressort sont sollicitées séparément sous l'effet de pivotement du levier par un doigt ou ergot solidaire de l'élément de sélection coopérant avec un élément de butée fixe. L'axe de pivotement, l'ergot et l'extrémité de l'articulation du levier, constituent trois points alignés de référence. Il en est de même lorsque la sélection est effectuée par un doigt solidaire d'une partie du levier. Dans ce cas, le ressort de rappel est monté sur un pivot.

On sait par ailleurs, la boîte de vitesses étant au point mort, qu'il est nécessaire que la commande soit également livrée au point mort correspondant à l'alignement des trois points précités. Dans ce but, d'une manière courante et parfaitement connue pour un homme du métier, on utilise un élément de blocage connu sous le nom d'outil de méthode, dont le but est de supprimer temporairement la fonction de sélection du levier. L'objectif est d'obtenir le meilleur calibrage possible entre le point mort du levier de commande et la commande interne de la boîte de vitesse. Ce résultat est obtenu par un réglage en longueur, notamment du câble de sélection.

Il s'est avéré que l'utilisation de cet outil de méthode, monté sur le levier de commande et conformé pour coopérer avec une partie du boîtier support, afin de supprimer temporairement la sélection, génère une contrainte au niveau de l'une des branches du ressort. L'outil de méthode a tendance à contraindre le ressort, ce qui provoque le déplacement angulaire de l'élément de sélection et, par conséquent, le désalignement des trois points. Il peut en résulter un mauvais calibrage au niveau du levier de commande et de la boîte de vitesse.

Pour remédier à ces inconvénients, une solution ressort de l'enseignement du brevet FR 2.847.877 appartenant au demandeur.

Selon l'enseignement de ce brevet, le ressort de rappel est monté sur un pivot engagé dans une partie du boîtier support avec capacité de déplacement en translation guidé sous l'effet d'un effort exercé sur une partie dudit ressort de rappel, afin d'obtenir l'alignement recherché, sans aucune contrainte sur le ressort de sélection.

Une autre solution ressort de l'enseignement du brevet FR 2.893.549 appartenant également au demandeur.

Selon l'enseignement de ce brevet, la partie qui fait office de butée au levier, afin d'interdire le passage, par inadvertance de la marche arrière, est montée avec capacité de déplacement guidé par rapport au levier, pour permettre le réglage de la course de sélection dudit levier à partir de la position point mort. Ce réglage résulte d'un déplacement de la butée au moyen d'un organe de calibrage correspondant à la course souhaitée et d'immobilisation de ladite butée dans cette position de réglage. Cette butée est généralement connue par l'homme du métier sous le nom de mur ou de trottoir.

A partir de cet état de la technique, le problème que se propose de résoudre l'invention, est de pouvoir calibrer au point mort le levier de commande de la boîte de vitesses avec la commande interne de cette dernière avec une autre conception de l'outil méthode, en ayant pour objectif de proposer une solution particulièrement simple et efficace.

Selon l'invention, le dispositif de calibrage comprend un élément apte à être monté directement sur le ressort de rappel de sélection afin de bloquer le levier au point mort.

En considérant la forme de réalisation du ressort de rappel, l'élément est engagé sur deux brins du ressort monté sur un axe pivot, lesdits brins étant en appui avec un doigt de sélection assujetti au levier.

Pour résoudre le problème posé d'assurer le blocage du ressort de rappel, l'élément comprend un corps présentant des agencements pour le positionnement des brins du ressort, et aptes à exercer un effort de serrage et de blocage desdits brins.

Dans une forme de réalisation, le corps est en deux parties accouplées à un lien, lesdites parties présentant des formes complémentaires d'emboîtement agencées pour exercer l'effort de serrage et de blocage des brins. Les formes complémentaires d'emboîtement sont du type mâle-femelle, les agencements étant constitués par un système de dentures complémentaires. Chacune des formes présente des empreintes pour le positionnement des brins du ressort.

Avantageusement, le pas et le nombre de dents permettent de rattraper la chaîne de cotes du ressort.

Selon une autre caractéristique, l'ensemble du levier et du support de commande est rendu solidaire d'un boîtier.

Compte tenu de la conception de l'élément de blocage qui fait office d'outil de méthode, le boîtier présente une ouverture pour le retrait de l'élément au moyen du lien qui constitue un anneau, afin de libérer le ressort en position de synchronisme avec la commande interne.

L'invention est exposée ci-après plus en détail à l'aide des figures des dessins annexés dans lesquels :

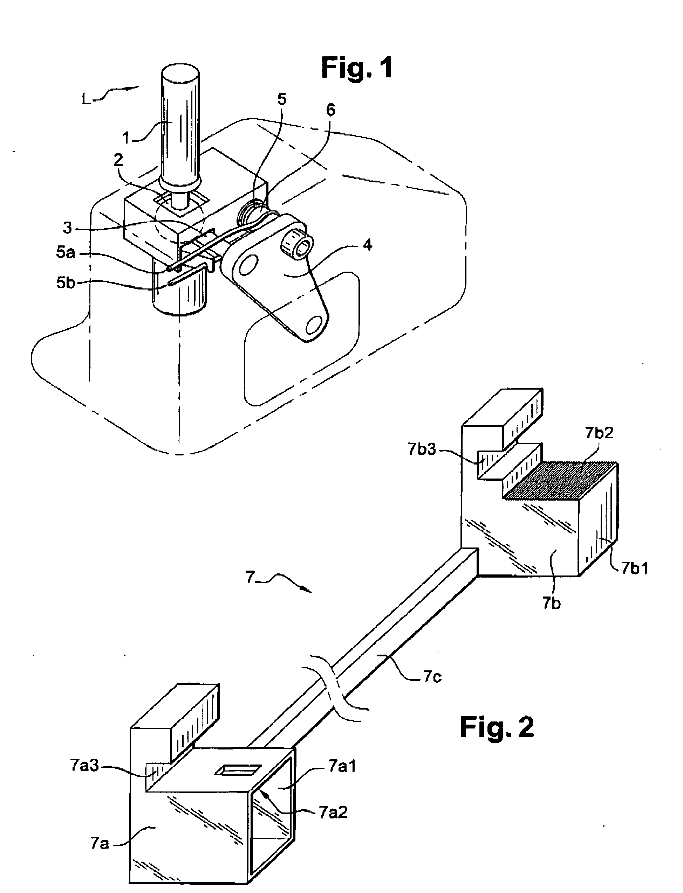

- la figure 1 est une vue en perspective à caractère schématique d'un levier de commande et de sélection et son support de commande rendu solidaire d'un boîtier ;
- la figure 2 est une vue en perspective du dispositif de blocage selon l'invention, avant montage sur le ressort de sélection ;

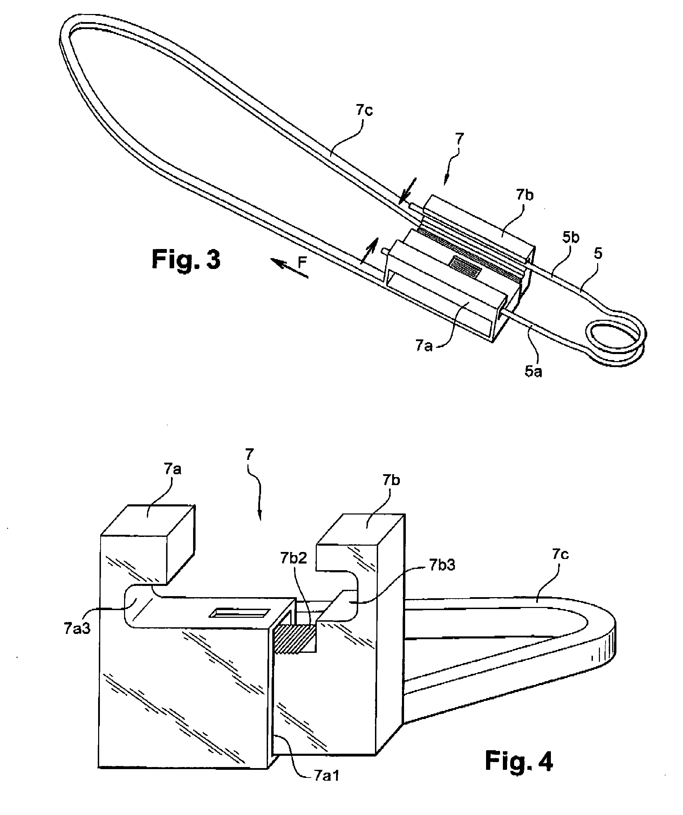

- la figure 3 est une vue en perspective du dispositif en position de blocage du ressort, lequel n'est pas représenté ;
- la figure 4 est une vue en perspective montrant le principe de fonctionnement du dispositif ;
- les figures 5, 6 et 7 montrent, par des vues partielles en perspective à caractère schématique, le principe de mise en place du dispositif par rapport au ressort de sélection ;
- la figure 8 est une vue en perspective montrant le retrait du dispositif par synchronisation du levier et avec la commande interne de la boîte de vitesse.

Le levier de commande (L) pour le passage et la section des vitesses et son support, sont fixés dans un boîtier, de tout type connu et approprié. Le levier (L) est monté avec capacité de déplacement multidirectionnel pour le passage et la sélection des vitesses. Par exemple, ce levier (L) est équipé d'une rotule (2) qui peut présenter un doigt (3). D'une manière parfaitement connue pour un homme du métier, l'élément de renvoi et de sélection (4) est assujetti à un ressort de rappel (5). Le doigt (3) est sollicité par les brins (5a) et (5b) du ressort de rappel (5) qui est un ressort en épingle dont la tête est montée sur un axe fixe (6) que présente l'organe de sélection (4). Ces dispositions sont parfaitement connues pour un homme du métier.

Selon l'invention, le dispositif pour calibrer au point mort le levier de commande (L) avec la commande interne de la boîte de vitesses, comprend un élément (7) apte à être monté directement sur le ressort de rappel (5) afin de bloquer le levier en position point mort. Comme il sera indiqué dans la suite de la description, l'élément (7) comprend un corps présentant des agencements pour le positionnement des brins (5a) et (5b) du ressort (5), et aptes à exercer un effort de serrage et de blocage desdits brins.

Comme le montrent les figures des dessins, le corps est en deux parties (7a) et (7b) reliées par un lien (7c). Chacune des parties (7a) et (7b) présente des formes complémentaires d'emboîtement (7a1) (7b1), du type mâle-femelle. Pour exercer l'effort de serrage et de blocage des brins (5a) et (5b) du ressort (5), les formes mâles (7b1) et femelles (7a1) présentent un système de dentures complémentaires (7b2) - (7a2).

Selon une autre caractéristique, chacune des parties (7a) et (7b) a des empreintes (7a3) - (7b3) pour le positionnement et le logement des brins (5a) et (5b) du ressort.

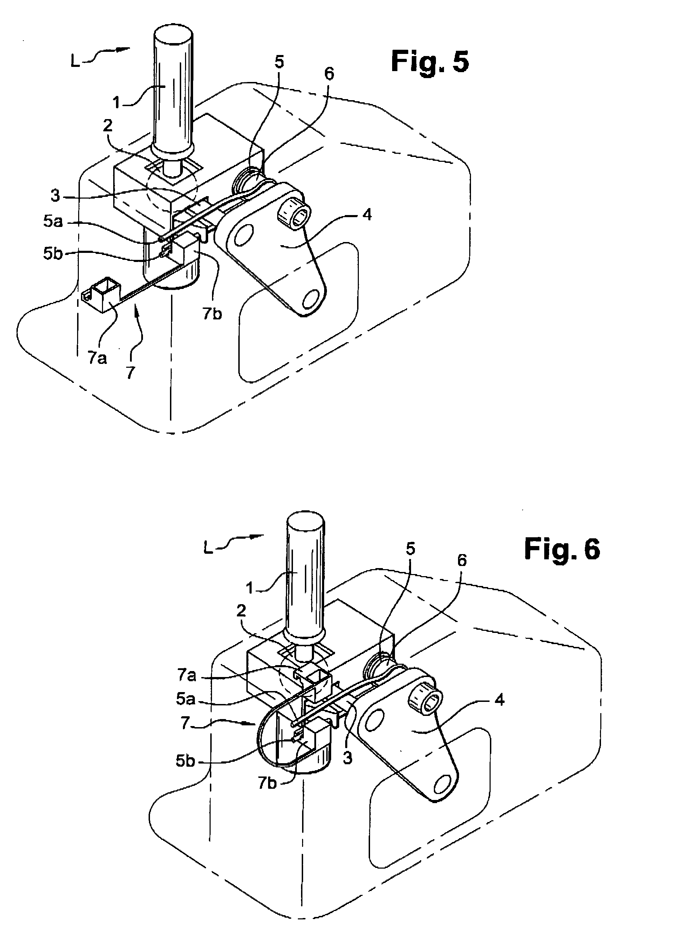

On renvoie aux figures 5, 6 et 7 qui montrent la mise en place du dispositif de blocage qui fait office d'outil de méthode par rapport aux brins (5a) et (5b) du ressort de sélection (5).

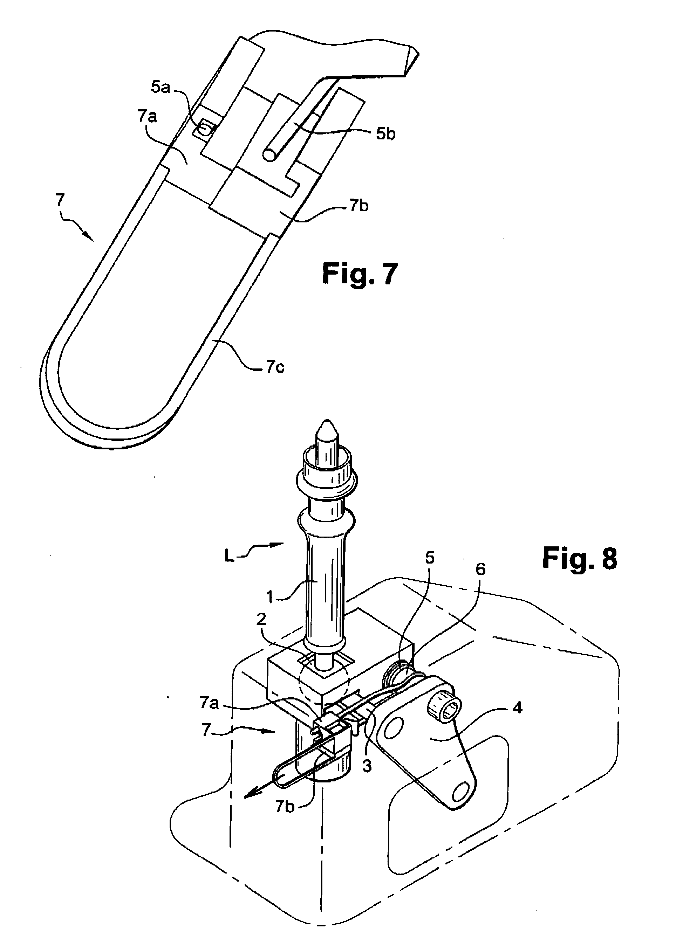

On positionne l'une des formes d'emboîtement (7a) en appui contre l'un des brins, par exemple le brin inférieur (5a) du ressort. Cette mise en place de l'outil (7) peut s'effectuer par le dessous du boîtier. On replie ensuite, sur lui-même, l'outil par le lien souple (7c) de manière à enserrer l'autre brin (5b) du ressort et engager la forme mâle (7b) dans la forme femelle (7a). (Figures 6 et 7). La première dent est alors engagée. On effectue en suite le serrage des deux parties (7a) et (7b), en exerçant un effort de pression sur ces dernières jusqu'à ce que le ressort ne bouge plus. Dans cette position de serrage et de blocage, les brins (5a) et (5b) sont positionnés dans les empreintes ou encoches (7a3) et (7b3) de l'outil (7).

A noter qu'au niveau du système de dentures complémentaires des deux parties d'emboîtement (7a) et (7b), une languette peut permettre le blocage dans un sens et le serrage dans l'autre, desdites parties.

Au moment de l'utilisation, il suffit de tirer sur le brin souple de liaison (7c) qui constitue un anneau pour libérer le ressort (5) qui sera donc synchronisé avec la commande interne de la boîte de vitesses.

A noter que la solution définie dans la présente demande peut tout à fait être combinée dans le cas d'un boîtier de commande de boîtes de vitesses équipé d'un trottoir de marche arrière réglable, comme défini dans le brevet précité FR 2.893.549. A noter que, pour assurer l'extraction de l'outil méthode, il suffit de pratiquer une ouverture au niveau du boîtier.

Selon une autre caractéristique, le pas et le nombre de dents des formes complémentaires d'accouplement (7a1) - (7b1) sont déterminés pour rattraper la chaîne de cotes du ressort (5).

Les avantages ressortent bien de la description, en particulier on souligne et on rappelle :
- la calibrage du ressort de rappel en sélection point mort du levier avec la commande interne de boîte de vitesses ;
- l'absence d'un outil de méthode entre le levier et le trottoir de la marche arrière ;
- la possibilité d'utiliser le dispositif selon l'invention dans le cas d'un trottoir de marche arrière réglable.

## Revendications

1. Dispositif pour calibrer, au point mort, un levier de commande (L) d'une boîte de vitesses avec la commande interne de ladite boîte de vitesses d'un véhicule automobile, ledit levier étant assujetti à des organes de passage et de sélection des vitesses, l'organe de sélection (4) étant asservi à un ressort de rappel (5),
**caractérisé en ce qu'**il comprend un élément (7) apte à être monté directement sur le ressort (5) afin de bloquer le levier (L) au point mort.

2. Dispositif selon la revendication 1, **caractérisé en ce que** l'élément (7) est engagé sur deux brins (5a) et (5b) du ressort (5) monté sur un axe pivot, lesdits brins étant en appui avec un doigt de sélection assujetti au levier.

3. Dispositif selon l'une quelconque des revendications 1 et 2, **caractérisé en ce que** l'élément (7) comprend un corps présentant des agencements pour le positionnement des brins (5a) et (5b) du ressort (5), aptes à exercer un effort de serrage et de blocage desdits brins.

4. Dispositif selon la revendication 3, **caractérisé en ce que** le corps est en deux parties (7a) et (7b) accouplées à un lien (7c), lesdites parties présentant des formes complémentaires d'emboîtement (7a1, 7b1) agencées pour exercer l'effort de serrage et de blocage des brins (5a) et (5b).

5. Dispositif selon la revendication 4, **caractérisé en ce que** les formes complémentaires d'emboîtement (7a1; 7b1) sont du type mâle-femelle, les agencements étant constitués par un système de dentures complémentaires (7a2; 7b2).

6. Dispositif selon les revendications 4 et 5, **caractérisé en ce que** chacune des formes présente des empreintes (7a3) - (7b3) pour le positionnement des brins du ressort (5a; 5b).

7. Dispositif selon la revendication 5, **caractérisé en ce que** le pas et le nombre de dents permettent de rattraper la chaîne de cotes du ressort (5).

8. Dispositif selon la revendication 1, **caractérisé en ce que** l'ensemble du levier (L) et du support de commande est rendu solidaire d'un boîtier.

9. Dispositif selon l'une quelconque des revendications 1 à 8, **caractérisé en ce que** le boîtier présente une ouverture pour le retrait de l'élément (7) au moyen du lien (7c) qui constitue un anneau, afin de libérer le ressort en position de synchronisme avec la commande interne.

## Claims

1. Device for calibrating, in neutral, a gearshift lever (L) of a gearbox with the internal control of said gearbox of a motor vehicle, said lever being secured to components for running through and selecting the gears, the selection component (4) being a slave to a return spring (5), **characterised in that** it includes an element (7) capable of being mounted directly onto the spring (5) in order to lock the lever (L) in neutral.

2. Device as claimed in claim 1, **characterised in that** the element (7) is engaged on two strands (5a) and (5b) of the spring (5) mounted on a swivel axis, said strands pressing against a selection pin secured to the lever.

3. Device as claimed in any one of claims 1 and 2, **characterised in that** the element (7) includes a body that has arrangements for positioning the strands (5a) and (5b) of the spring (5), capable of applying tightening and locking stress to said strands.

4. Device as claimed in claim 3, **characterised in that** the body is in two parts (7a) and (7b) connected with a link (7c), said parts having complementary interlocking shapes (7a1; 7b1) arranged so as to apply the tightening and locking stress to said strands (5a) and (5b).

5. Device as claimed in claim 4, **characterised in that** the complementary interlocking shapes (7a1; 71b) are of the male-female type, the arrangements being constituted by sets of complementary teeth (7a2; 7b2).

6. Device as claimed in claims 4 and 5, **characterised in that** each of the shapes has impressions (7a3) - (7b3) for positioning the strands of the spring (5a; 5b).

7. Device as claimed in claim 5, **characterised in that** the pitch and the number of teeth make it possible to catch the chain of dimensions of the spring (5).

8. Device as claimed in claim 1, **characterised in that** the lever (L) and control support assembly is made interdependent with a casing.

9. Device as claimed in any one of claims 1 to 8, **characterised in that** the casing has an opening for withdrawing the element (7) using the link (7c) which constitutes a ring, in order to release the spring in a position of synchronisation with the internal control.

## Patentansprüche

1. Vorrichtung zur Kalibrierung eines Getriebeschalthebels (L) im Totpunkt mit der internen Schaltung des besagten Getriebes eines Automobils, wobei der besagte Hebel von Bauteilen für die Gangschaltung und Gangwahl abhängig ist und das Bauteil für die Gangwahl (4) von einer Rückholfeder (5) abhängig ist,
**dadurch gekennzeichnet, dass** sie ein Bauelement (7) umfasst, das unmittelbar an der Feder (5) angebracht werden kann, um den Schalthebel (L) im Totpunkt zu blockieren.

2. Vorrichtung nach Anspruch 1, **dadurch gekennzeichnet, dass** das Bauelement (7) auf zwei Schenkel (5a) und (5b) der auf einer Drehachse angebrachten Feder (5) gesetzt wird, wobei diese Schenkel auf einem vom Hebel abhängigen Gangwähler aufliegen.

3. Vorrichtung nach Anspruch 1 oder 2, **dadurch gekennzeichnet, dass** das Bauteil (7) ein Hauptstück mit Vorkehrungen für die Positionierung der Schenkel (5a) und (5b) der Feder (5) aufweist, die geeignet sind, die besagten Schenkel einzuspannen und zu blockieren.

4. Vorrichtung nach Anspruch 3, **dadurch gekennzeichnet, dass** das Hauptstück aus zwei Teilen (7a) und (7b) besteht, die mit einem Verbindungsteil (7c) gekoppelt sind, wobei die besagten Teile sich ergänzende ineinandergreifende Formen (7a1; 7b1) aufweisen, die so beschaffen sind, um die Kraft für das Einspannen und Blockieren der Schenkel (5a) und (5b) auszuüben.

5. Vorrichtung nach Anspruch 4, **dadurch gekennzeichnet, dass** die sich ergänzenden ineinandergreifenden Formen (7a1; 7b1) zusammengesteckt werden können, wobei die Vorkehrungen aus einem System komplementärer Zahnungen (7a2; 7b2) bestehen.

6. Vorrichtung nach Ansprüche 4 oder 5, **dadurch gekennzeichnet, dass** jede der Formen Aussparungen (7a3) - (7b3) (für die Positionierung der Federschenkel (5a ; 5b) aufweist.

7. Vorrichtung nach Anspruch 5, **dadurch gekennzeichnet, dass** die Steigung und die Anzahl der Zähne das Nachstellen der Maßkette der Feder (5) ermöglichen.

8. Vorrichtung nach Anspruch 1, **dadurch gekennzeichnet, dass** die Baugruppe aus Hebel (L) und Schaltbock mit einem Gehäuse fest verbunden wird.

9. Vorrichtung nach einem der vorhergehenden Ansprüche 1 - 8, **dadurch gekennzeichnet, dass** das Gehäuse eine Öffnung für das Herausnehmen des Bauelementes (7) mit Hilfe des einen Ring bildenden Verbindungsteils (7c) aufweist, um die Feder in Synchronstellung mit der internen Schaltung freizugeben.
